Europäisches Patentamt

European Patent Office

Office européen des brevets

(11) Numéro de publication: 0 304 101
A1

## DEMANDE DE BREVET EUROPEEN

(21) Numéro de dépôt: 88201529.0

(22) Date de dépôt: 15.07.88

(51) Int. Cl.⁴: A01D 51/00

(30) Priorité: 21.07.87 FR 8710435

(43) Date de publication de la demande:
22.02.89 Bulletin 89/08

(84) Etats contractants désignés:
AT BE CH DE ES FR GB GR IT LI LU NL SE

(71) Demandeur: CONCEPTION, ELABORATION,
REALISATION D'ENSEMBLES
ELECTRONIQUES ET MECANIQUES S.A.R.L.
131, rue du Pot Trinquat
F-46000 Cahors(FR)

(72) Inventeur: Czajkowski, Didier
9, rue Carrière
F-31700 Blagnac(FR)
Inventeur: Labarthe, Joel
44, rue St-Martin des Prés
F-12000 Rodez(FR)
Inventeur: Bouyou, Bertrand
131, rue du Pot Trinquat
F-46000 Cahors(FR)

(74) Mandataire: Barre, Philippe
Cabinet Barre, Gatti, Laforgue 95, rue des
Amidonniers
F-31069 Toulouse Cedex(FR)

(54) Procédé et machine pour le ramassage de produits, notamment de fruits sur le sol.

(57) L'invention concerne un procédé et une machine
pour le ramassage de produits, notamment de fruits
sur le sol. Cette machine est du type comprenant
une source d'air sous pression raccordée à une
gaine de soufflage (4, 9) terminée par une ouverture
de soufflage disposée à proximité du sol, un châssis
portant une rampe (12) inclinée reposant sur le sol
en regard de la gaine de soufflage, et des moyens
de réception disposés vers le bord supérieur de la
rampe inclinée. Selon l'invention, la gaine de soufflage (4, 9) est agencée de façon que l'ouverture de
soufflage délivre le flux d'air vers la rampe inclinée
(12) selon un sens opposé au sens d'avancement de
la machine, et la rampe inclinée (12) est portée par
des moyens d'articulation adaptés pour lui conférer
une cinématique de déplacement telle que son bord
inférieur se déplace par rapport au châssis selon
une trajectoire dont la tangente forme avec le sol un
angle aigu ouvert vers l'arrière.

Fig. 4

## PROCEDE ET MACHINE POUR LE RAMASSAGE DE PRODUITS, NOTAMMENT DE FRUITS SUR LE SOL

L'invention concerne un procédé pour le ramassage de produits, notamment de fruits sur le sol, du type consistant à déplacer une machine comportant un châssis portant une rampe inclinée venant en contact avec le sol par une portion inférieure et formant un angle obtu et un angle aigu supplémentaire avec le sol, et à propulser les produits vers cette rampe au moyen d'un flux de fluide dirigé en regard de l'angle obtu de ladite rampe inclinée. Cette invention s'étend à une machine de mise en oeuvre de ce procédé.

Plusieurs machines utilisant une source d'air sous pression, en lieu et place d'organes mécaniques, pour soulever des fruits et les propulser vers une rampe inclinée, sont actuellement connues. Toutefois, aucune de ces machines ne donne, à l'heure actuelle, entièrement satisfaction, en raison des solutions adoptées quant à l'agencement de la rampe inclinée et de la gaine de soufflage.

Selon une première technique, décrite notamment dans les brevets US n° 3 675 405, n° 4 194 346 et la demande de brevet française FR n° 2 531 305, la rampe inclinée et la gaine de soufflage sont disposées transversalement par rapport au sens d'avancement de la machine. Par conséquent, seuls les fruits se trouvant entre le bord inférieur de la rampe inclinée et la bouche de soufflage sont ramassés. Pour balayer une zone intéressante et éviter ainsi un nombre important de passages, le bord inférieur de la rampe est donc relativement éloigné de la bouche de soufflage. Il est alors obligatoire de prévoir une soufflerie de grande puissance et d'orienter la bouche de soufflage de façon à délivrer un flux d'air sensiblement horizontal. Outre l'obligation de prévoir une soufflerie de grande puissance, cette solution conduit à plusieurs inconvénients. D'une part, le flux étant horizontal, les fruits disposés sous le niveau moyen du sol ne sont pas ramassés. De plus, en raison de la puissance de la soufflerie, il existe des risques certains de relever la terre à proximité de la bouche de soufflage. Ce type de machine n'est, enfin, pas adapté pour être utilisé sur des terrains enherbés. En effet, le flux d'air a alors tendance à coucher l'herbe qui joue un rôle de déflecteur et dévie, par conséquent, ce flux d'air vers le haut, diminuant notablement le pourcentage de fruits ramassés.

Selon une deuxième technique, décrite notamment comme variante dans la demande de brevet française FR n° 2 531 305, la rampe inclinée et la gaine de soufflage sont disposées parallèlement par rapport au sens d'avancement de la machine, le sens du flux d'air étant le même que le sens d'avancement de cette machine. Le bord inférieur de la rampe inclinée devant passer au-dessus des fruits avant que ceux-ci ne soient exposés au flux d'air, cette rampe est, en outre, articulée autour d'un arbre transversal. L'inconvénient relatif à la distance importante séparant la bouche de soufflage de la rampe inclinée se trouve donc solutionné. Toutefois, cette technique présente également plusieurs inconvénients. D'une part, le fait que la rampe inclinée se soulève lors de la rencontre de fruits ou d'obstacles naturels entraîne une perte importante du flux d'air qui s'infiltre sous la rampe et a tendance à repousser les fruits se trouvant derrière celle-ci. De plus, sur des sols chargés en déchets, il se produit rapidement, à l'arrière de la rampe inclinée, une accumulation des déchets que celle-ci ne parvient pas à franchir. Enfin, lors de l'utilisation de cette machine en terrain accidenté, le bord inférieur de la rampe ne se trouve pas en contact avec le sol sur toute sa largeur, et une part importante du flux d'air s'infiltre sous la rampe. Dans ce dernier cas, en outre, les fruits se trouvant sous le niveau moyen du sol ne sont pas ramassés.

L'objectif essentiel de la présente invention est de pallier les inconvénients des machines connues en fournissant un procédé et une machine aptes à permettre le ramassage des fruits avec une même efficacité quelle que soit la nature du terrain (enherbé, accidenté, chargé en déchets, mouillé...).

Un autre objectif de l'invention est de fournir une machine apte à effectuer un triage en éliminant les fruits de trop petites dimensions, les brindilles, les feuilles et autres déchets.

Un autre objectif est de fournir une machine dont les pièces, présentant des risques d'usure sont en nombre réduit et facilement accessibles.

A cet effet, l'invention vise un procédé pour le ramassage de produits, notamment de fruits sur le sol du type consistant à déplacer une machine comportant un châssis portant une rampe inclinée venant en contact avec le sol par sa portion inférieure et formant un angle obtu et un angle aigu supplémentaire avec le sol, et à propulser les produits vers ladite rampe au moyen d'un flux de fluide dirigé en regard de l'angle obtu de ladite rampe. Selon l'invention, ce procédé se caractérise en ce qu'il consiste :
- à diriger le flux d'air selon un sens parallèle et opposé au sens d'avancement de la machine de façon que les produits se trouvent toujours du côté de l'angle obtu de la rampe inclinée,
- à articuler la rampe inclinée de façon à conférer à cette dernière une cinématique de déplacement telle que sa portion inférieure se déplace par rapport au châssis selon une trajectoire dont la tangente forme avec le sol un angle aigu s'ouvrant vers l'arrière par rapport au sens d'avancement de la machine.

Cette invention s'étend à une machine apte à être déplacée en vue du ramassage de produits, notamment de fruits sur le sol, du type comprenant une source d'air sous pression raccordée à une gaine de soufflage terminée par une ouverture de soufflage disposée à proximité du sol, un châssis portant une rampe inclinée dotée d'une portion inférieure reposant sur le sol, en regard de l'ouverture de soufflage, et des moyens de réception disposés vers le bord opposé, dit supérieur, de la rampe inclinée. Cette machine se caractérise en ce que :

- la gaine de soufflage est agencée de façon que l'ouverture de soufflage délivre le flux d'air vers la rampe inclinée selon un sens opposé au sens d'avancement de la machine,

- la rampe inclinée est portée par des moyens d'articulation adaptés pour lui conférer une cinématique de déplacement telle que sa portion inférieure se déplace par rapport au châssis selon une trajectoire dont la tangente forme avec le sol un angle aigu s'ouvrant vers l'arrière par rapport au sens d'avancement de la machine.

La gaine de soufflage recule donc nécessairement par rapport au sens d'avancement de la machine, sa bouche de soufflage se situant à proximité du sol afin de passer au-dessus des produits, sans les toucher.

Cette spécification entraîne le fait que la rampe inclinée, dont le rôle est de dévier les fruits propulsés par le flux d'air vers des moyens de réception, se trouve constamment en contact avec le sol par sa portion inférieure.

Pour éviter un blocage de la machine qu'induit naturellement cette configuration lors de la rencontre d'un obstacle naturel, la rampe inclinée est donc, en outre, articulée de façon que sa portion inférieure se déplace selon une trajectoire dont la tangente forme avec le sol un angle aigu s'ouvrant vers l'arrière.

Cette articulation permet ainsi de transformer partiellement l'action mécanique horizontale issue de la rencontre de la rampe avec un obstacle à franchir en une force ascendante générant le soulèvement de ladite rampe.

Cette cinématique de déplacement peut être obtenue en réalisant une rampe inclinée se présentant sous la forme d'une glissière venant en contact avec le sol par sa portion inférieure et inclinée vers l'arrière par rapport au sens d'avancement de la machine. Préférentiellement, cette cinématique est obtenue en conférant à la rampe une cinématique équivalente à celle d'un élément tiré articulé à l'avant de la rampe par rapport au sens d'avancement de la machine.

Un élément tiré, c'est-à-dire dont l'articulation est agencée vers l'avant par rapport au sens de déplacement de la machine, se déplace en effet vers le haut selon une trajectoire circulaire centrée sur son axe d'articulation, lors de la rencontre d'un obstacle. Cet élément se déplace donc simultanément vers l'arrière par rapport au sens d'avancement de la machine, et vers le haut pour surmonter l'obstacle.

Comme indiqué ci-dessus, cette cinématique de déplacement peut être obtenue au moyen d'une articulation de la rampe inclinée agencée vers l'avant de celle-ci par rapport au sens de déplacement de la machine. Toutefois, selon un mode de réalisation préférentiel, les moyens d'articulation comprennent au moins un parallélogramme déformable comportant deux bielles mobiles articulées, d'une part sur un châssis fixe et d'autre part, chacune, sur une des extrémités d'une troisième bielle mobile portant la rampe inclinée.

Pour des utilisations dans des vergers enherbés ou sur des sols très secs, la portion inférieure de la rampe inclinée peut être dotée d'un rouleau libre en rotation et de faibles dimensions par rapport à la taille des fruits à ramasser, ou recourbée horizontalement vers l'arrière de façon à glisser sur le sol. Toutefois, afin de permettre le ramassage des fruits sur d'autres types de terrains, tels que terrains recouverts de paille ou boueux, cette portion inférieure est préférentiellement dotée d'un rouleau de faible diamètre par rapport à la taille des fruits à récolter, entraîné mécaniquement en rotation, de façon que sa vitesse tangentielle de glissement sur le sol soit sensiblement nulle et qu'il n'induise aucun frottement sur le sol.

Ainsi, sur sol boueux, on n'encourt pas le risque de voir se former un amoncellement de boue à l'avant de la rampe inclinée, en raison d'une part des faibles dimensions du rouleau et, d'autre part d'une vitesse de glissement nulle. En outre, sur des sols paillés, les déchets relativement longs se trouvent plaqués au sol par le rouleau avant de passer sous ce dernier. Les déchets légers sont, quant à eux, propulsés vers les moyens de réception avec les fruits avant d'être triés, comme on le verra plus loin.

Par ailleurs, afin de permettre un ramassage efficace des fruits sur un sol accidenté, la rampe inclinée est préférentiellement divisée transversalement en plusieurs éléments séparés juxtaposés, dits sabots, articulés de façon à pouvoir débattre indépendamment les uns par rapport aux autres.

Cette disposition permet d'obtenir un suivi de sol ménageant une étanchéité parfaite sous la rampe inclinée, et ce malgré les accidents de terrain rencontrés. Grâce à cette étanchéité, les différents sabots jouent donc parfaitement leur rôle de déflecteurs aérodynamiques, permettant le transport des fruits au moyen d'un flux d'air de débit et de pression relativement faibles.

Pour améliorer cette étanchéité, on applique en outre et avantageusement une pression prédéfinie ajustable sur la rampe inclinée de façon à plaquer sa portion inférieure sur le sol avec une force d'intensité adaptable en fonction de la nature du sol. Ainsi, cette pression sera relativement importante sur des terrains très secs, en vue d'éviter des rebonds de la rampe sur le sol. Par contre, elle sera relativement faible sur des terrains boueux, afin d'éviter d'enfoncer cette rampe dans le sol.

D'autres caractéristiques, buts et avantages de l'invention se dégageront de la description détaillée qui suit en référence aux dessins annexés qui en présentent un mode de réalisation préférentiel et une variante de réalisation. Sur ces dessins qui font partie intégrante de la présente description :

- la figure 1 est une vue de côté schématique d'une machine pour le ramassage des fruits sur le sol, conforme à l'invention,

- la figure 2 est une vue en perspective partielle du dispositif de ramassage de fruits monté à l'avant de cette machine,

- la figure 3 en est une coupe transversale par un plan A,

- la figure 4 est une vue de côté de ce dispositif de ramassage,

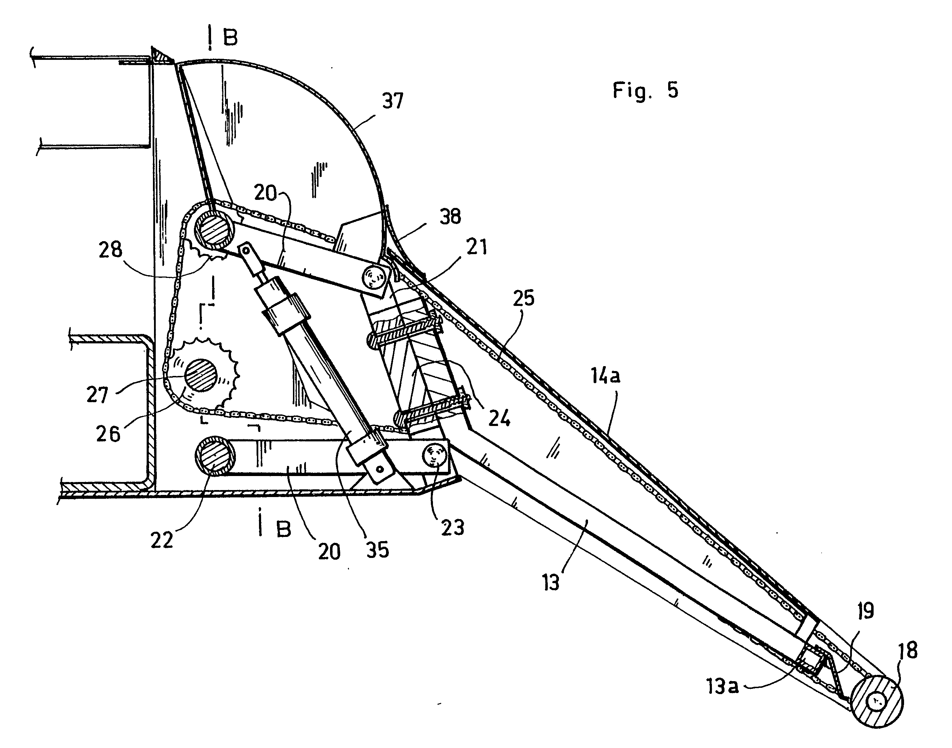

- la figure 5 est une coupe longitudinale d'un des sabots formant la rampe inclinée de ce dispositif, dans la position basse de ce dernier,

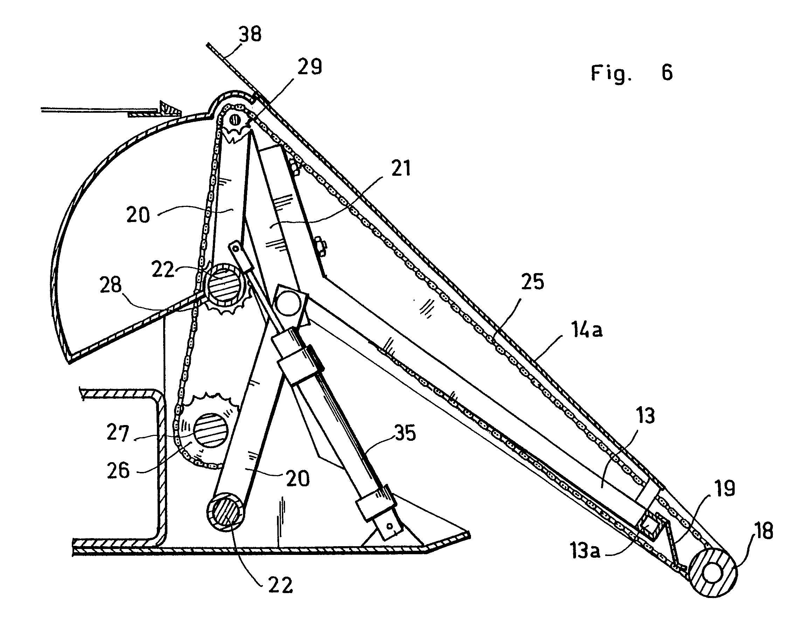

- la figure 6 est une coupe longitudinale de ce sabot dans sa position haute,

- la figure 7 est une coupe de principe illustrant la cinématique de déplacement d'un sabot,

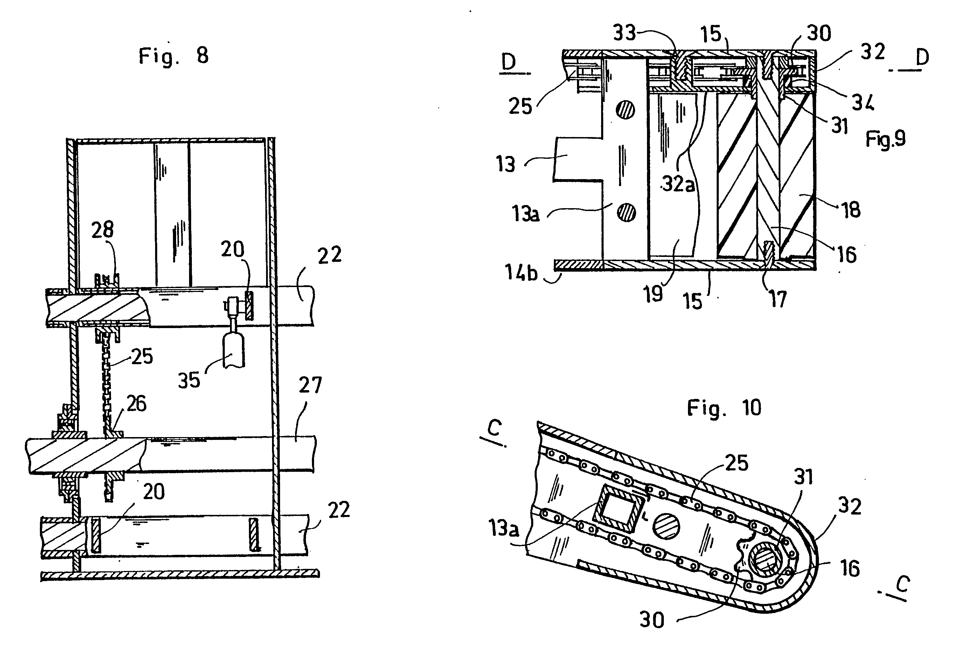

- la figure 8 est une coupe transversale d'un sabot selon un plan brisé B-B, dans la position basse de ce sabot,

- la figure 9 est une coupe longitudinale par un plan horizontal C de l'extrémité du sabot,

- la figure 10 en est une coupe longitudinale par un plan vertical D,

- la figure 11 est une coupe longitudinale partielle par un plan vertical E de cette machine,

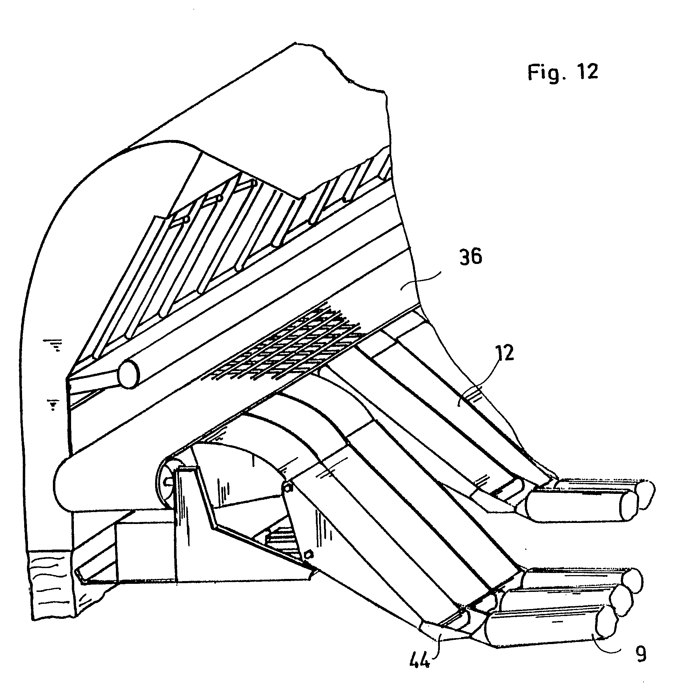

- la figure 12 est une vue en perspective partielle d'une variante du dispositif de ramassage.

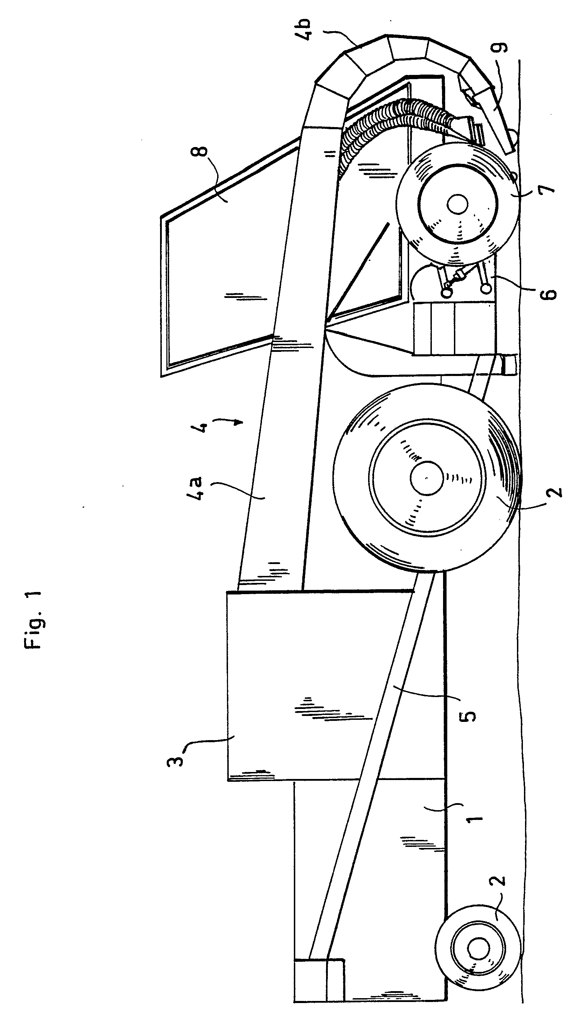

La machine pour le ramassage des fruits représentée schématiquement à la figure 1 est réalisée à partir d'un tracteur agricole 1 traditionnel comportant une boîte à vitesse dotée de plusieurs rapports de marche arrière, afin de permettre son utilisation avec un sens d'avancement opposé au sens de déplacement traditionnel.

Ce tracteur 1 est doté de quatre roues 2 dotées de pneus lisses de grande largeur, de façon à ne pas faire de saignées dans les vergers où il est appelé à se déplacer. Il est également équipé d'un groupe de ventilation 3 raccordé à une gaine de soufflage 4, et d'un tapis roulant 5 latéral destiné à acheminer les fruits récoltés par le dispositif de ramassage vers une remorque (non représentée) attelée à l'arrière de ce tracteur, en considérant son sens d'avancement.

Le dispositif de ramassage des fruits est porté par un châssis 6 monté à l'avant de ce tracteur 1, toujours en considérant le sens d'avancement de ce dernier. Ce châssis 6 est porté par deux roues 7 transversales et relié au tracteur au moyen d'une double articulation lui permettant de débattre librement en fonction des déclivités de terrain.

Le châssis 6 porte d'une part, une cabine de pilotage 8 décalée transversalement par rapport à l'axe de symétrie longitudinal du tracteur et, juxtaposé à cette cabine, le dispositif de ramassage de fruits. Cette disposition de la cabine 8 et du dispositif de ramassage a pour but de réaliser une machine dont la hauteur totale permet son passage sous les branches basses des arbres fruitiers, tout en offrant une très bonne visibilité au conducteur.

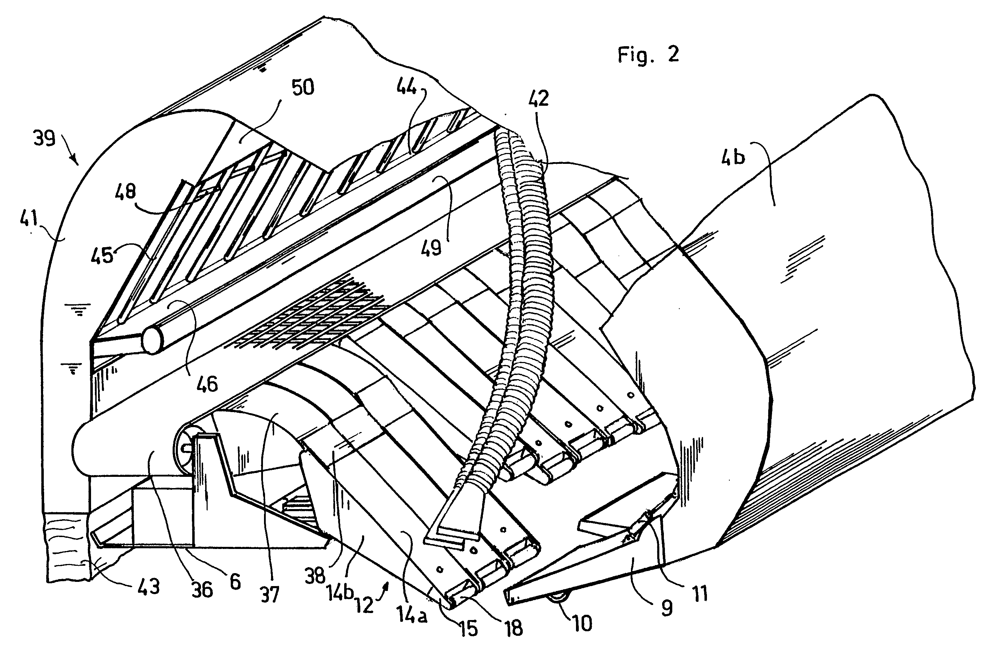

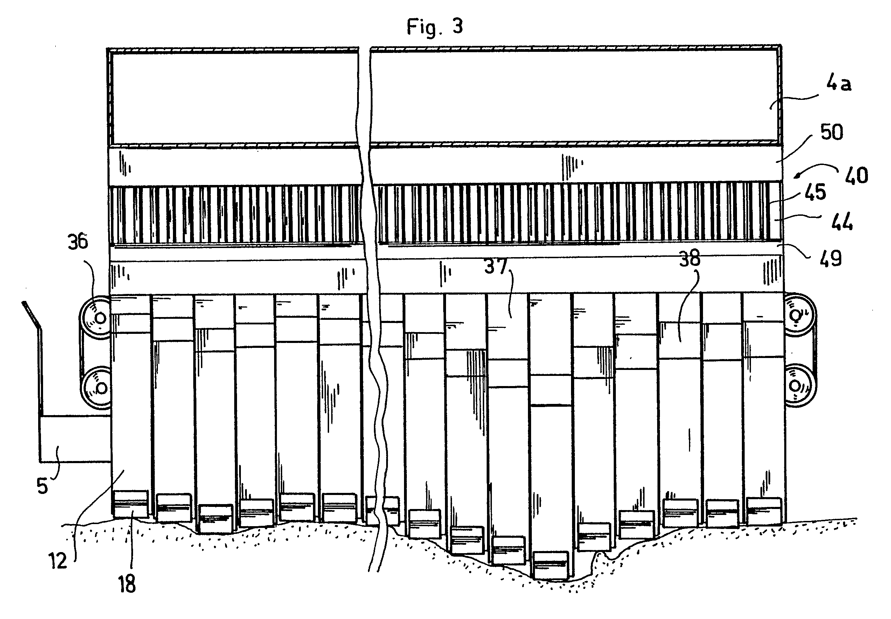

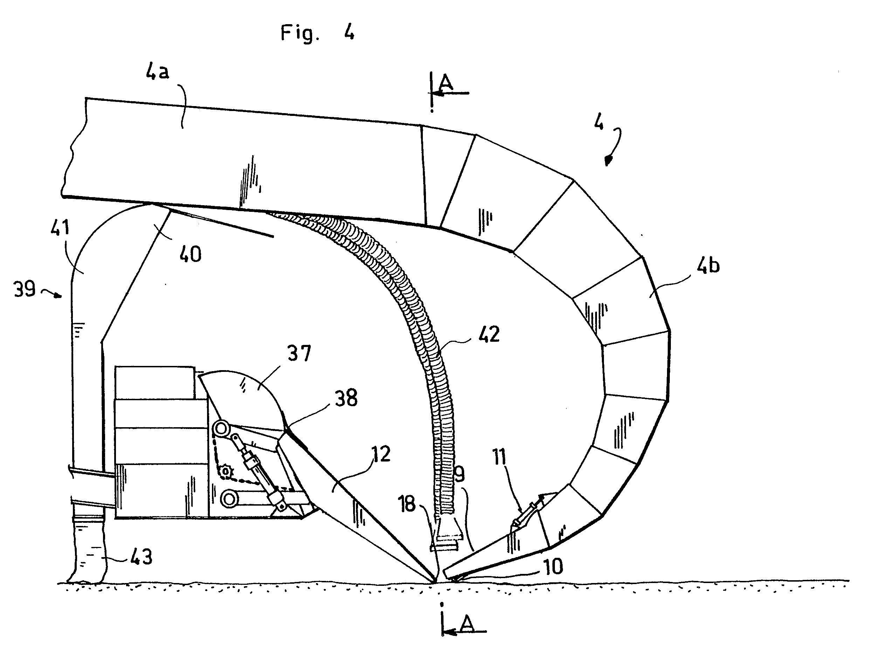

Le dispositif de ramassage proprement dit est représenté aux figures 2 à 4. Il comporte, en premier lieu, la gaine de soufflage 4 raccordée au groupe de ventilation 3 du tracteur 1. Cette gaine comporte un plénum de soufflage 4a s'étendant vers l'avant à partir du groupe de ventilation et terminé par un tronçon descendant 4b recourbé vers l'arrière. Ce tronçon courbe 4b est prolongé par une pluralité de conduits 9 séparés, juxtaposés transversalement et articulés sur l'extrémité de ce tronçon 4b. Ces conduits 9 reposent sur le sol par l'intermédiaire d'un organe d'appui 10 constitué d'un demi-anneau métallique adapté pour que la bouche de soufflage de ces conduits 9 soit située à proximité du sol, à environ 6 cm au-dessus du sol. Ces organes d'appui 10 permettent aux conduits de soufflage 9, qui reculent par rapport au sens d'avancement de la machine, de passer au-dessus des fruits sans les repousser.

L'articulation de chaque conduit 9 de soufflage sur la gaine 4 est, quant à elle, obtenue au moyen d'un vérin 11 pneumatique à effort modulable, articulé respectivement sur lesdits conduit et plénum. L'utilisation de tels vérins 11 présente un double avantage. D'une part, ils permettent de maintenir les organes d'appui 10 plaqués sur le sol avec une force d'intensité ajustable en fonction de la nature du terrain et indépendante de la position des conduits 9. A cet effet, la pression des différents vérins est ajustée à l'aide d'un seul manomètre de façon que tous les conduits 9 soient plaqués sur le sol avec une même force. D'autre part, ces vérins 11 permettent de soulever rapidement les conduits 9 du sol, en bout de rang, afin de permettre les manoeuvres de braquage de la machine.

Par ailleurs, un conduit 42 de soufflage transversal, par rapport au sens d'avancement de la machine, est également raccordé sur le plénum de soufflage 4a. Ce conduit de soufflage 42 est agencé de façon à délivrer un flux d'air latéral, sur un côté de la machine, destiné à repousser les fruits disposés dans l'alignement des arbres et à permettre leur ramassage lors du passage de la machine dans la rangée adjacente.

En regard des bouches de soufflage se trouve disposée une rampe inclinée s'élevant à partir du sol dans le sens du flux d'air. Cette rampe inclinée est constituée d'une pluralité de sabots 12 séparés, juxtaposés transversalement. Le nombre de sabots 12 est supérieur au nombre de conduits de soufflage 9. Par exemple, une machine dotée de 23 sabots de 10 cm de largeur possèdera 8 conduits de soufflage de 30 cm de largeur.

Chacun de ces sabots 12 comprend une membrure centrale 13 longitudinale et inclinée, coudée vers le haut dans sa moitié supérieure, et présentant la forme d'un T à son extrémité inférieure. Sur cette membrure centrale 13 est fixée une coiffe 14 en aluminium présentant une paroi frontale 14a faisant office de déflecteur aérodynamique pour le flux d'air et de parois latérales 14b de part et d'autre de cette membrure 13.

Les deux parois latérales 14b sont interrompues au niveau de l'extrémité en forme de T de la membrure centrale 13 et sont prolongés par deux flasques 15 en inox soudés aux deux extrémités de la barre transversale 13a de ce T. Ces deux flasques 15 portent un axe 16 en bronze fixé au moyen de deux vis 17, autour duquel est disposé un rouleau 18 transversal en polyuréthane, de petit diamètre par rapport à la taille des fruits à ramasser.

La paroi frontale 14a de la coiffe se prolonge quant à elle au-delà de l'extrémité inférieure de la membrure centrale 13, de façon à venir sensiblement tangenter le rouleau transversal 18.

En outre, une raclette 19 est fixée sur la barre transversale 13a formant l'extrémité de la membrure centrale 13. Cette raclette 19 est de forme adaptée pour venir sensiblement tangenter le rouleau transversal 18 vers une de ses génératrices latérales, de façon à décoller tout dépôt, notamment de boue, susceptible d'être collé à ce rouleau.

La fixation de chaque sabot 12 sur le châssis 6 est réalisée au moyen de deux parallélogrammes déformables disposés transversalement de part et d'autre de la membrure centrale 13, en arrière de celle-ci. Chacun de ces parallélogrammes comprend deux premières bielles 20 mobiles articulées d'une part sur le châssis 6 et, d'autre part, chacune, sur l'extrémité d'une troisième bielle 21 mobile, au moyen d'axes d'articulation 22, 23 reliant les deux parallélogrammes. La membrure centrale 13 du sabot 12 est quant à elle fixée au moyen de boulons sur une entretoise 24 reliant les troisièmes bielles mobiles 21 des deux parallélogrammes.

Ce type d'articulation présente l'avantage de conférer à chaque sabot 12 une cinématique de déplacement équivalente à celle d'un élément tiré et dont l'articulation serait par conséquent agencée vers l'avant, tout en limitant l'amplitude de débattement vers le haut de ce sabot par rapport à celle d'un tel élément tiré.

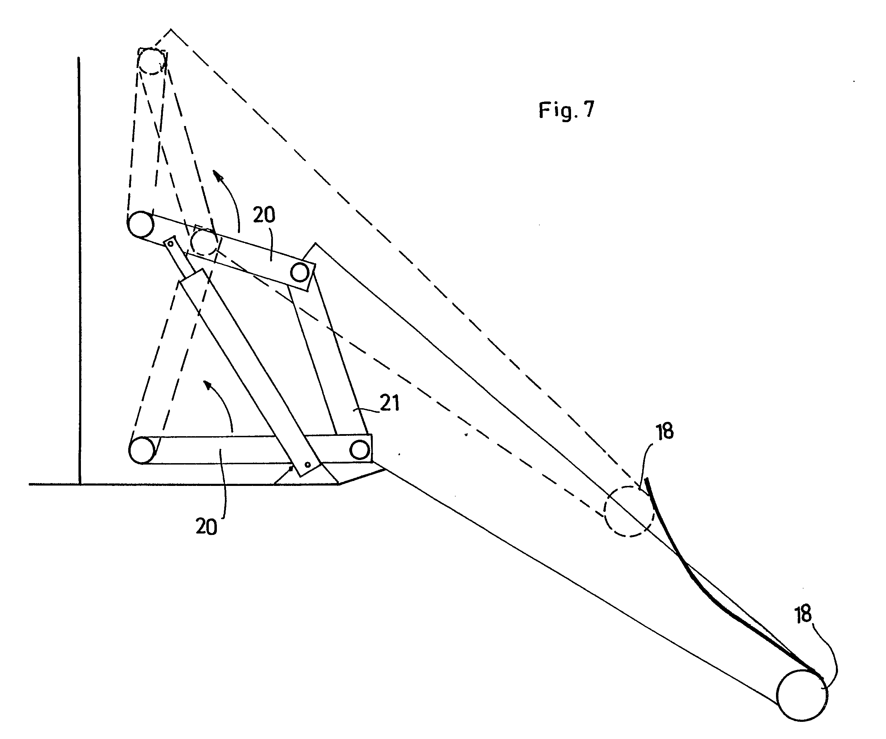

Cette cinématique de déplacement est primordiale, puisqu'elle permet d'éviter un blocage de la machine lors de la rencontre d'un obstacle naturel. En effet, comme illustré à la figure 7, le sabot recule alors relativement au sens de déplacement de la machine, selon une trajectoire sensiblement inclinée vers l'arrière à 45°, et ne subit donc aucun effet de blocage.

Par ailleurs, afin d'éviter tout frottement du rouleau 18 sur le sol, notamment sur des terrains boueux ou paillés, ce dernier est entraîné mécaniquement en rotation de manière proportionnelle par rapport à la vitesse d'avancement de la machine, de façon que sa vitesse tangentielle de glissement sur le sol soit nulle, voire légèrement positive.

Cet entraînement est obtenu pour chaque sabot 12 au moyen d'une chaîne 25 engrenée sur un pignon 26 porté par un arbre transversal 27 commun à tous les sabots. Cette chaîne 25 est en outre guidée autour de pignons de guidage 28, 29 solidaires des axes d'articulation 22, 23 des bielles mobiles 20, 21, et agencés de façon à constituer les sommets d'un parallélogramme déformable avec le pignon d'entraînement 26. Cette chaîne peut ainsi être utilisée sans tendeur, et ce malgré les débattements du sabot.

La mise en rotation proprement dite du rouleau 18 est obtenue au moyen d'un pignon 30 en acier monté libre en rotation autour de l'axe 16 porteur de ce rouleau et prolongé latéralement par une bague 31 emmanchée dans une face latérale du rouleau.

Il est à noter que cet entraînement par chaîne et pignon peut être remplacé par un système courroie ronde/poulies.

Par ailleurs, un carter 32 assure la protection de la chaîne 25 au niveau de l'extrémité inférieure du sabot 12. Ce carter de protection 32 présente une section verticale en forme d'épingles à cheveux et est fixé au moyen de vis 33 sur un des flasques 15 monté vers l'extrémité du sabot. Il est fermé en outre, en regard du rouleau 18, par une paroi latérale 32a dotée d'un orifice pour le passage de la bague 31. Un joint 34 torique ou à lèvres, maintenu comprimé entre le pignon 30 et la paroi latérale 32a du carter 32, permet enfin de se garantir contre toute infiltration.

Chaque sabot 12 est également doté d'un vérin pneumatique 35 à effort modulable adapté pour plaquer le rouleau 18 sur le sol avec une pression ajustable en fonction de la nature du terrain et indépendante de la position de ce sabot. Ce vérin 35 est articulé d'une part sur le châssis 6 et, d'autre part, sur une des bielles mobiles 20 d'un des parallélogrammes déformables. La pression des vérins 35 des différents sabots 12 est en outre ajustée à l'aide du manomètre utilisé pour les vérins 11 des conduits de soufflage 9, de façon à obtenir une pression proportionnelle à celle desdits vérins de conduits de soufflage.

La présence de ces vérins 35 combinée au fait que la rampe inclinée est divisée en plusieurs sabots 12 indépendants permet d'obtenir un parfait suivi de sol ménageant une étanchéité parfaite sous le plan incliné. Chaque sabot 12 forme donc un parfait déflecteur aérodynamique qui permet d'acheminer les fruits portés par le flux d'air vers des moyens de réception situés à l'arrière des sabots.

Ces moyens de réception sont constitués d'une bande transporteuse 36 transversale positionnée en arrière et au-dessus du bord supérieur du sabot 12, de façon à permettre à ce dernier de se déplacer vers le haut. La liaison entre le bord supérieur du sabot 12 et cette bande transporteuse 36 est réalisée au moyen d'une pièce de jonction 37 présentant une section transversale de forme arrondie, de concavité orientée vers le bas, assujettie sur une des bielles mobiles 20 des parallélogrammes déformables. Cette pièce 37 peut ainsi s'escamoter sous la bande transporteuse 36 lors d'un déplacement du sabot 12 vers le haut.

Pour atténuer la cassure de pente que forme cette pièce de jonction 37 avec la paroi frontale 14a du sabot, une bavette flexible 38 en inox est en outre fixée au niveau de l'extrémité supérieure de cette paroi frontale. La présence de cette bavette 38 et de la pièce de jonction 37 assurent donc la continuité de la face frontale 14a des sabots 12 jusqu'à la bande transporteuse 36 qui achemine elle-même les fruits vers le tapis roulant latéral 5.

Cette bande transporteuse 36 présente, en outre, une structure de caillebottis dont les mailles sont de dimensions adaptées pour laisser passer les fruits ou corps étrangers de petite taille.

Les déchets légers tels que brindilles, feuilles sont quant à eux portés par le flux d'air vers une hotte de récupération 39 dotée d'une ouverture 40 située en arrière et au-dessus de la bande transporteuse 36 et d'un tronçon de gaine 41 vertical adapté pour acheminer les déchets et les déposer sur le sol.

L'extrémité inférieure de ce tronçon 41 est dotée d'une jupe souple 43 adaptée pour frotter sur le sol de façon à diriger le flux d'air vers l'arrière de la machine. Cette jupe 43 empêche ainsi le flux d'air de se diriger vers l'avant de la machine et de perturber le fonctionnement pneumatique de cette dernière. Elle évite également que le flux ne frappe le sol verticalement et ne déterre des mottes de terre.

De plus, la hotte de récupération 39 est dotée d'un dispositif de pulvérisation d'eau adapté pour humidifier la poussière.

L'ouverture 40 est, quant à elle, dotée d'une grille 44 constituée de barreaux 45 disposés transversalement au travers de cette ouverture et espacés d'une distance adaptée pour laisser passer les produits et déchets de petite taille. Ces barreaux 45 présentent, en outre, une longueur adaptée pour ménager une section de passage libre 46 en partie basse de l'ouverture 40.

Par ailleurs, un peigne rotatif 47 est agencé derrière la grille 44. Ce peigne rotatif 47 comporte des dents 48 adaptées pour s'insérer entre les barreaux 45, lors de leur rotation, en vue de repousser les déchets retenus par ladite grille vers la section de passage libre 46 de l'ouverture 40.

Afin d'éviter que des produits ne passent par la section de passage libre 46 de l'ouverture 40, un déflecteur 49 est, en outre, disposé au-dessus de la bande transporteuse 36, en regard de cette section de passage 46. Ce déflecteur 49 présente une forme cylindrique dépourvue, par conséquent, de saillies risquant de mâcher les fruits.

La hotte 39 comporte, enfin, une plaque de mousse 50 disposée au-dessus de l'ouverture 40 et destinée à éviter de mâcher les fruits venant heurter la paroi frontale de cette hotte.

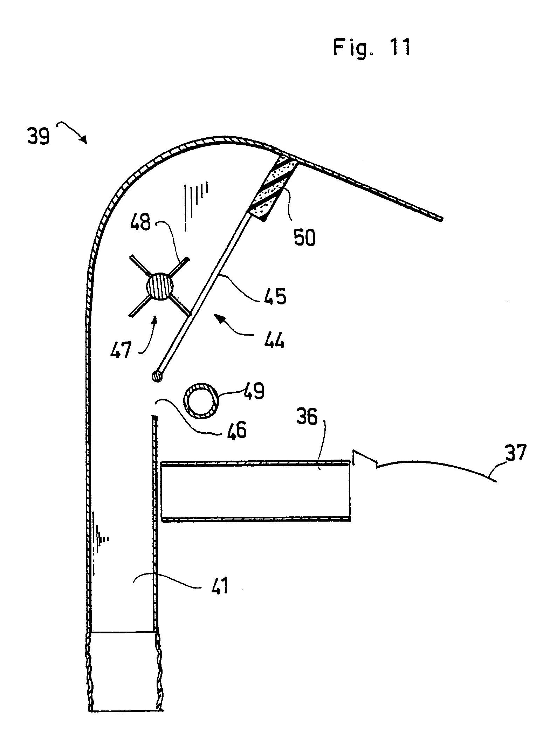

La machine représentée à la figure 11 est une machine globalement similaire à celle décrite ci-dessus, pour laquelle les conduits de soufflage 9 ne reposent pas sur le sol par l'intermédiaire d'un organe d'appui, mais sont reliés chacun à un sabot 12, au moyen de deux flasques 51 fixés vers l'extrémité de ce sabot. En conséquence, le nombre de conduits de soufflage 9 est identique au nombre de sabots. De plus, ces conduits de soufflage 9 sont réalisés au moyen de tuyaux flexibles de façon à pouvoir se déformer lors des débattements des sabots.

Les différentes caractéristiques de ces machines permettent donc leur utilisation, avec une même efficacité, sur tous les types de terrain habituellement rencontrés dans les vergers. De plus, le fait de réaliser cette machine à partir d'un tracteur agricole traditionnel lui confère une bonne fiabilité et permet de faire effectuer sa maintenance par les concessionnaires habituels, sans formation spécifique de ces derniers.

Les seules pièces spécifiques de cette machine susceptibles d'une usure prématurée sont quant à elles en nombre limité et sont facilement accessibles. Ces pièces sont, en effet, la membrure centrale 13 du sabot, le rouleau de polyuréthanne 18 et la chaîne d'entraînement 25 de ce rouleau, qui peuvent tous être changés sans intervention d'une main-d'oeuvre spécialisée. Il est à remarquer en outre que les matériaux utilisés sont adaptés pour augmenter la longévité des différents éléments constitutifs des sabots.

## Revendications

1/ - Procédé pour le ramassage de produits, notamment de fruits, sur le sol, du type consistant à déplacer une machine comportant un châssis (6) portant une rampe inclinée venant en contact avec le sol par sa portion inférieure et formant un angle obtu et un angle aigu supplémentaire avec le sol, et à propulser les produits vers ladite rampe au moyen d'un flux de fluide dirigé en regard de l'angle obtu de ladite rampe, ledit procédé étant caractérisé en ce qu'il consiste :
- à diriger le flux d'air selon un sens opposé au sens d'avancement de la machine de façon que les produits se trouvent toujours du côté de l'angle obtu de la rampe inclinée,
- à articuler la rampe inclinée de façon à conférer à cette dernière une cinématique de déplacement telle que sa portion inférieure se déplace par rapport au châssis (6) selon une trajectoire dont la tangente forme avec le sol un angle aigu s'ouvrant vers l'arrière par rapport au sens d'avancement de la machine.

2/ - Procédé selon la revendication 1, caractérisé en ce que l'on confère à la rampe inclinée une cinématique de déplacement équivalente à celle d'un élément tiré, articulé sur le châssis (6) à l'avant de ladite rampe, par rapport au sens d'avancement de la machine.

3/ - Procédé selon l'une des revendications 1 ou 2, caractérisé en ce que l'on dote la portion inférieure de la rampe inclinée d'un rouleau (18) de faible diamètre par rapport à la taille des produits à ramasser, et en ce que l'on entraîne mécaniquement ledit rouleau en rotation, de façon que sa vitesse tangentielle de glissement sur le sol soit sensiblement nulle.

4/ - Procédé selon l'une des revendications 1, 2 ou 3, caractérisé en ce que l'on divise transversalement la rampe inclinée en plusieurs éléments (12) séparés et juxtaposés, articulés de façon à pouvoir débattre vers le haut indépendamment les uns par rapport aux autres.

5/ - Procédé selon l'une des revendications 1, 2, 3 ou 4, caractérisé en ce que l'on applique une pression prédéfinie ajustable sur la rampe inclinée de façon à plaquer sa portion inférieure sur le sol avec une force d'intensité adaptable en fonction de la nature du sol.

6/ - Machine apte à être déplacée en vue du ramassage de produits, notamment de fruits sur le sol, du type comprenant une source (3) d'air sous pression raccordée à une gaine de soufflage (4, 9) terminée par une ouverture de soufflage disposée à proximité du sol, un châssis (6) portant une rampe inclinée dotée d'une portion inférieure reposant sur le sol, en regard de l'ouverture de soufflage, et des moyens de réception (36) disposés vers le bord opposé, dit supérieur, de la rampe inclinée, ladite machine étant caractérisée en ce que :
- la gaine de soufflage (4, 9) est agencée de façon que l'ouverture de soufflage délivre le flux d'air vers la rampe inclinée selon un sens opposé au sens d'avancement de la machine,
- la rampe inclinée est portée par des moyens d'articulation (20-23) adaptés pour lui conférer une cinématique de déplacement telle que sa portion inférieure se déplace par rapport au châssis (6) selon une trajectoire dont la tangente forme avec le sol un angle aigu ouvert vers l'arrière par rapport au sens d'avancement de la machine.

7/ - Machine selon la revendication 6, caractérisée en ce que les moyens d'articulation comprennent au moins un parallélogramme déformable (20-23) comportant deux bielles mobiles (20) articulées d'une part sur le châssis (6) et d'autre part, chacune, sur une des extrémités d'une troisième bielle (21) mobile portant la rampe inclinée, de façon à conférer à ladite rampe une cinématique de déplacement équivalente à celle d'un élément tiré, articulé sur le châssis (60) à l'avant de ladite rampe, par rapport au sens d'avancement de la machine.

8/ - Machine selon l'une des revendications 6 ou 7, caractérisée en ce que la rampe inclinée est divisée transversalement en plusieurs éléments (12) indépendants, dits sabots, portés chacun par des moyens d'articulation (20-23) propres, en vue de permettre auxdits sabots de débattre vers le haut indépendamment les uns par rapport aux autres.

9/ - Machine selon la revendication 8, caractérisée en ce que la portion inférieure de chaque sabot (12) est dotée d'un rouleau (18) transversal de faible diamètre par rapport à la taille des produits à ramasser, des moyens (25-31) d'entraînement en rotation asservis à la vitesse d'avancement de la machine étant adaptés pour déplacer ledit rouleau avec une vitesse tangentielle de glissement sur le sol sensiblement nulle.

10/ - Machine selon les revendications 7 et 9 prises ensemble, caractérisée en ce que les moyens d'entraînement des rouleaux (18) comprennent un moteur d'entraînement comportant un arbre (27) transversal pourvu d'un pignon (26) d'entraînement en regard de chaque sabot, et pour chaque sabot :
- des pignons (28, 29) de guidage solidaires de l'extrémité des bielles mobiles (20, 21) et agencés de façon à constituer les sommets d'un parallélogramme déformable avec un des pignons d'entraînement (26),
- un pignon (30) de guidage solidaire de l'axe de rotation du rouleau (18),
- une chaîne (25) de transmission reliant le pignon d'entraînement (26) et les pignons de guidage (28-30), de façon à entraîner le rouleau (18) en rotation.

11/ - Machine selon l'une des revendications 6 à 10, caractérisée en ce qu'elle comprend au moins un vérin pneumatique (35) à effort modulable adapté pour plaquer la portion inférieure de la rampe inclinée sur le sol, avec une pression ajustable en fonction de la nature du terrain, et indépendante de la position de ladite rampe.

12/ - Machine selon les revendications 7, 8 et 11 prises ensemble, caractérisée en ce qu'elle comprend un vérin pneumatique (35) par sabot (12), lesdits vérins étant articulés d'une part, sur le châssis (6) et d'autre part, sur une des bielles (20) d'articulation desdits sabots et étant reliés à un manomètre unique adapté pour ajuster tous les vérins à une même pression.

13/ - Machine selon l'une des revendications 6 à 12, caractérisée en ce que la gaine de soufflage comprend un plénum (4) de soufflage et une pluralité de conduits (9) de soufflage juxtaposés transversalement et articulés sur ledit plénum, chacun desdits conduits étant doté de moyens (10) d'appui au sol.

14/ - Machine selon les revendications 12 et 13 prises ensemble, caractérisée en ce que chaque conduit de soufflage (9) est articulé sur le plénum (4) au moyen d'un vérin (11) pneumatique dont la pression est ajustée au moyen du manomètre relié aux vérins (35) des sabots (12), de façon à obtenir une pression proportionnelle à celle desdits vérins de sabots.

15/ - Machine selon la revendication 8, caractérisée en ce que la gaine de soufflage comprend un plénum (4) de soufflage et une pluralité de conduits (9) de soufflage flexibles en nombre égal au nombre de sabots, chacun desdits conduits étant relié rigidement à l'extrémité d'un sabot (12), de façon que son ouverture de soufflage soit maintenue à une distance prédéfinie de la portion inférieure dudit sabot.

16/ - Machine selon l'une des revendications 13 à 15, caractérisée en ce qu'elle comprend un conduit (42) de soufflage transversal par rapport au sens d'avancement de ladite machine, ledit conduit étant raccordé au plénum de soufflage (4) et étant agencé de façon à délivrer un flux d'air latéral sur un côté de la machine.

17/ - Machine selon la revendication 7, caractérisée en ce que :
- les moyens de réception comprennent une bande transporteuse (36) transversale disposée en arrière et au-dessus du bord supérieur de la rampe inclinée,
- une pièce de jonction (37) présentant une section de forme arrondie, de concavité orientée vers le bas, est interposée entre la bande transporteuse (36) et le bord supérieur de la rampe inclinée, ladite pièce de jonction étant assujettie sur une bielle mobile (20) de façon à s'escamoter sous la bande transporteuse (36) lors d'un débattement vers le haut de la rampe inclinée.

18/ - Machine selon la revendication17, caractérisée en ce que le bord supérieur de la rampe inclinée est doté d'une bavette (38) flexible apte à se déformer au contact de la pièce de jonction (37), de façon à assurer une continuité de pente au niveau de la jonction entre lesdites rampe inclinée et pièce de jonction.

19/ - Machine selon l'une des revendications 17 ou 18, caractérisée en ce que la bande transporteuse (36) présente une structure en caillebotis dont les mailles sont de dimensions adaptées pour laisser passer les produits et corps étrangers de petite taille.

20/ - Machine selon l'une des revendications 17, 18 ou 19, caractérisée en ce qu'elle comprend des moyens de stockage constitués d'un tapis roulant (5) latéral adapté pour réceptionner les fruits transportés par la bande transporteuse (36) et les acheminer vers une remorque attelée à l'arrière de la machine.

21/ - Machine selon l'une des revendications 17 à 20, caractérisée en ce qu'elle comprend une hotte (39) de récupération des débris légers, dotée d'une ouverture (40) située en arrière et au-dessus de la bande transporteuse (36) et d'un tronçon de gaine vertical (41) adapté pour acheminer lesdits déchets et les déposer sur le sol.

22/ - Machine selon la revendication 21, caractérisée en ce qu'elle comprend :
- une grille (44) constituée de barreaux (45) disposés transversalement au travers de l'ouverture (40) de la hotte (39) et espacés d'une distance adaptée pour laisser passer les produits et corps étrangers de petite taille, lesdits barreaux présentant une longueur adaptée pour ménager une section de passage libre (46) en partie basse de l'ouverture (40),
- un peigne rotatif (47) agencé derrière la grille (44) et doté de dents (48) adaptées pour s'insérer entre les barreaux (45), lors de leur rotation, en vue de repousser les déchets retenus par ladite grille vers la section de passage libre (46) de l'ouverture (40).

23/ - Machine selon la revendication 22, caractérisée en ce qu'elle comporte un déflecteur (49) disposé au-dessus de la bande transporteuse (36), en regard de la section de passage libre (46) de l'ouverture (40).

24/ - Machine selon l'une des revendications 21 à 23, caractérisée en ce que la hotte de récupération (39) est munie d'une jupe souple (43) disposée vers l'extrémité inférieure du tronçon de gaine vertical (41) et adaptée pour frotter sur le sol de façon à diriger le flux vers l'arrière de la machine.

25/ - Machine selon l'une des revendications 21 à 24, caractérisée en ce que la hotte de récupération (39) comprend un dispositif de pulvérisation d'eau adapté pour humidifier la poussière.

Fig. 1

EP 0 304 101 A1

Fig. 2

Fig. 3

EP 0 304 101 A1

Fig. 4

EP 0 304 101 A1

Fig. 5

EP 0 304 101 A1

Fig. 6

EP 0 304 101 A1

Fig. 7

EP 0 304 101 A1

Fig. 9

Fig. 10

Fig. 8

Fig. 11

Fig. 12

36

12

44

9

EP 0 304 101 A1

Office européen
des brevets

# RAPPORT DE RECHERCHE EUROPEENNE

Numero de la demande

EP 88 20 1529

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | US-A-4 194 346 (INGALLS)<br>* En entier *<br>--- | 1,6 | A 01 D 51/00 |
| D,A | US-A-3 675 405 (DENTON)<br>* En entier *<br>--- | 1,6 | |
| A | GB-A-1 031 439 (PULLIN)<br>* Page 3, lignes 10-12; figure 8 *<br>--- | 1,6 | |
| A | US-A-2 562 775 (CRULL)<br>* En entier *<br>--- | 1,2,6,7,19,20 | |
| A | AU-B-9 018 382 (DUTSCHKE)<br>* Page 8, lignes 16-21; figure 2 *<br>--- | 3,9 | |
| A | US-A-4 499 713 (STONE)<br>* En entier *<br>--- | 1,6 | |
| A | GB-A-2 114 863 (STUCKEY)<br>* Page 2, lignes 1-7 *<br>--- | 20 | |
| A | US-A-2 682 742 (HIATT)<br>--- | | **DOMAINES TECHNIQUES RECHERCHES (Int. Cl.4)** |
| A | CA-A-1 127 398 (SORRENTI)<br>----- | | A 01 D |

Le présent rapport a été établi pour toutes les revendications

| Lieu de la recherche | Date d'achèvement de la recherche | Examinateur |
|---|---|---|
| LA HAYE | 20-10-1988 | DE LAMEILLIEURE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)